# EUROPEAN PATENT SPECIFICATION

(11) **EP 3 396 789 B1**
(45) Date of publication and mention of the grant of the patent: **03.03.2021**
(21) Application number: 17168498.8
(22) Date of filing: 27.04.2017
(51) Int. Cl.: H01R 13/639, H01R 13/627, H01R 13/193, H01R 13/11, H01R 13/64, H01R 13/631

(54) **CONNECTOR FOR AIRBAG RESTRAINT SYSTEMS**
VERBINDER FÜR AIRBAG-RÜCKHALTESYSTEME
CONNECTEUR POUR DES SYSTÈMES DE RETENUE PAR AIRBAG

(43) Date of publication of application: 31.10.2018
(73) Proprietor: Aptiv Technologies Limited, St. Michael (BB)
(72) Inventor: HOLWEG, Harald, 91239 Henfenfeld (DE); KUMARAN, Satheeshkumar, 600117 Chennai Tamil Nadu (IN); LOGANATHAN, Partheeban, 600019 Chennai Tamil Nadu (IN)
(74) Representative: Mader, Joachim

(56) References cited:
- WO-A1-2013/092193
- DE-A1-102007 014 065
- DE-A1-102014 215 562
- JP-A- 2017 062 913
- US-A1- 2004 147 157
- US-A1- 2013 316 563

## Description

### I. Field of the invention

The present invention relates to a connector, in particular for airbag restraint systems. The connector comprises a connector housing and a terminal support device. The terminal support device is assigned to the connector housing so that it is movable relative to the connector housing from an open position to a support position.

### II. Technical background

In many applications, the safe coupling of connectors is of high importance. For example, in the case of car safety systems, as e.g. airbag systems in passenger cars, the connectors used for the connection of an airbag to its ignition base have to be provided with reliable safety systems. To ensure that the connectors cannot become loose unintentionally, locking means are used to guarantee a safe mechanical coupling.

The provision of vehicles in the areas of safety, comfort and multimedia has grown rapidly in recent years. All these new functions require additional electrical and mechanical effort. Additional electrical wiring and plug-in systems must be installed in the vehicle. This led to a trend of miniaturization in the production of vehicles. Smaller cross sections were chosen for the electrical lines and the electrical plug systems were dimensioned smaller. However, there are limits to miniaturization when it comes to keeping the plug-and-socket systems manageable during assembly. In addition, it must be ensured that faulty assembly of the connectors is excluded for safety-relevant plug-in connections. Some years ago a kind of a connector type was developed and successfully used in the field so that this connector type has become established in airbag applications. Document EP2966735 discloses such an air bag connector. This connector has a secondary lock and is used in many vehicles. However, despite its miniaturization, this connector has a certain size. The plug protrudes from the mating connector in the plugged state, which can lead to problems during assembly in very confined spaces. Since the miniaturization now produces plug-in systems that are no longer manageable and larger components, such as ferrite bodies, must also be accommodated, another way must be found to solve the problems.

Document DE 10 2014 215 562 A1 relates to a coupling device comprising a plug and a plug collar, and a bolt, wherein the plug and the plug collar comprise an opening at their outer walls, and wherein the plug comprises a socket contact and wherein the plug collar comprises a plug contact.

Document JP 2017-062913 A relates to a connection structure for a terminal comprising a male terminal including a male-side connection part, a female terminal including a female side connection part into which the male-side connection part can be moved and in which the moved-in male-side connection part is mounted.

The object of the invention is to provide a plug connector for an airbag ignition device, which is easy to handle during assembly, provides a secure plug-in connection and is suitable for narrow building spaces.

These and other objects which become apparent upon reading the following description are solved by an electrical connector according claim 1 and an electrical connector assembly according to claim 6.

### Summary of the invention

According to the invention, an electrical connector for airbag restraint systems comprising an elongated housing aligned on longitudinal axis, surrounding at least one elongated terminal having a contact surface. Furthermore a terminal support device, attached on the elongated housing and movable longitudinally, along the elongated housing, from an open position to a support position. The terminal support device increases the contact pressure of the contact surface, to a counter contact element, when the connector is mated to a counter connector and the terminal support device is in the support position.

Generally preferred, an electrical connector assembly comprising a connector and a counter connector, wherein the counter connector comprises a plane surface, arranged perpendicular to a counter connector axis and along to the longitudinal axis. A part of the at least one counter contact element protrudes from the plane surface along the counter connector axis.

Preferably, the elongated housing has an elongated opening and the terminal support device protrudes from the inside of the elongated housing, through the elongated opening, to outward the elongated housing. This allows to insert and operating the terminal support device manually from the outside.

Preferably, the elongated housing comprises a locking opening, arranged in a flexible tong. The terminal support device comprises a first locking protrusion and a second locking protrusion protruding outward the elongated housing. The first locking protrusion is located in the locking opening when the terminal support device is in the open position. The first locking protrusion and the second locking protrusion are located in the locking opening when the terminal support device is in the support position. This design allows an easy handling while attaching the terminal support device to the connector as well as control of the terminal support device in the two different positions.

Advantageously, the terminal support device comprises a support protrusion protruding perpendicular to the longitudinal axis inward the elongated housing. The support protrusion is optimized to be easy fitted inside the elongated housing and cooperate with elongated terminals.

Advantageously, the support protrusion comprises a flat activation surface for increasing said contact pressure and being aligned to the longitudinal axis. This design gives the elongated terminals some space to move perpendicular to the longitudinal axis while connecting the connector to the counter connector. In the support position the flat activation surface interacts with the bend portion to increase pressure to the contact surface.

Advantageously, the elongated terminal comprises a straight portion and a bend portion. In the support position the flat activation surface interacts with the bend portion to increase pressure to the contact surface. To control the level and behavior of the force the shape of the bended portion can be varied. The bend portion can be carried out curved or stepped or angled.

Advantageously, the flat activation surface is arranged opposite the straight portion when the terminal support device is in the open position. The flat activation surface contacts the bend portion when the terminal support device is in the support position. The flat portions guide each other while moving from one position to the other.

Preferably, the elongated housing comprises a bar, protruding in a mating direction along the longitudinal axis, having a third locking protrusion to lock the elongated housing to a locking opening in a flexible locking tong of said counter connector. The third locking protrusion locks the connector safety to the counter connector.

Preferably, the electrical connector comprises two elongated terminals and wherein the protrusion is arranged between the two elongated terminals. The elongated shape of the terminal makes the terminals flexible and leave room for fixing means to fix the terminals into the elongated housing. The position between the terminals makes it possible to operate both terminals by using only one protrusion.

Preferably, a shroud surrounds, at least partly, the at least one counter contact element. The shroud protects the counter contact element from destruction while manufacturing and provide means to hold and lock the connector.

Preferably, the length of the part of the at least one counter contact element protruding out of the plane surface, is less than 50% of the extension, of the shroud from the plane surface, along the counter connector axis. This makes a flat design of the connector assembly possible.

Preferably, the plane surface comprises at least one groove aligned along the longitudinal axis. The electrical connector comprises at least one rib aligned along the longitudinal axis. The at least one rib is carried in the at least one groove, when the connector and the counter connector are fully connected. The position and size of the rib and the groove allow a coding of connector to counter connector to make sure that only the correct connector can be connected to the counter connector. Furthermore the groove is also a guiding means for the rib of the connector.

Preferably, the contact surface of the at least one elongated terminal is arranged in an angle outward to the longitudinal axis and whereby the at least one counter contact element is pin shaped. The contact surface works like a funnel for the counter contact element.

### Description of the preferred embodiments

In the following, the invention is described exemplarily with reference to the enclosed figures, in which
- Figs. 1a, 1b: show schematic illustrations of a connector assembly in not connected and connected state;
- Fig. 2: shows an exploded illustration of the connector illustrated in Figs. 1a and 1b;
- Fig. 3a: shows a side view of the counter connector;
- Fig. 3b: shows a top view of the counter connector;
- Fig. 4a: shows a cut view of the connector assembly of Fig. 1b with a cut along the longitudinal axis, with the support device in an open position;
- Fig. 4b: shows a cut view of the connector assembly of Fig. 1b with a cut along the longitudinal axis, with the support device in a support position;
- Fig. 5: shows a cut view of the connector assembly of Fig. 1b with a cut along the longitudinal axis, with the support device in a support position;

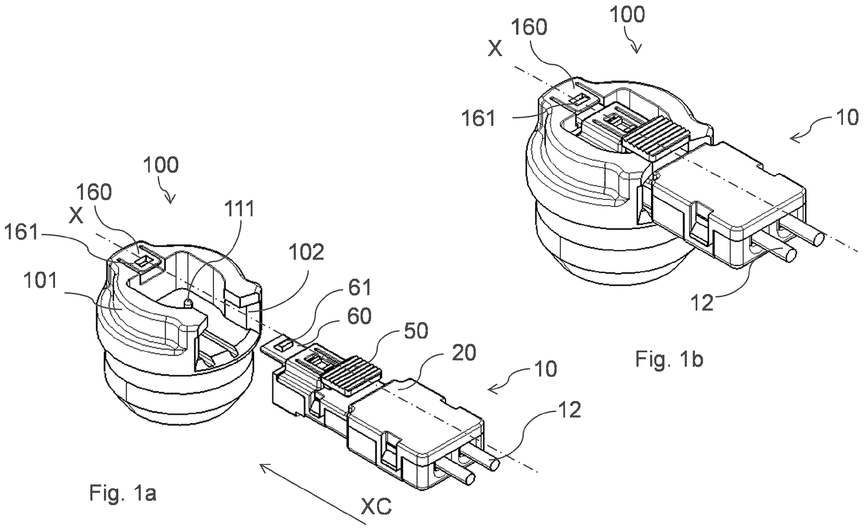

Figure 1a, 1b shows a perspective, three-dimensional view of a connector assembly in accordance with the invention. The connector 10 comprises an elongated housing 20 that is aligned on longitudinal axis X. A terminal support device 50, attached on the elongated housing 20 and movable longitudinally along the elongated housing 20 from an open position O (Fig. 1a) to a support position C (Fig 1b). The elongated housing 20 comprises a bar 60, protruding in a mating direction XC along the longitudinal axis X. The bar 60 is having a third locking protrusion 61 to lock the elongated housing 20 to a locking opening 161 in a flexible locking tong 160 of said counter connector 100. Electrical wires 12 protrude, from the inside of the connector 10 to the outside.

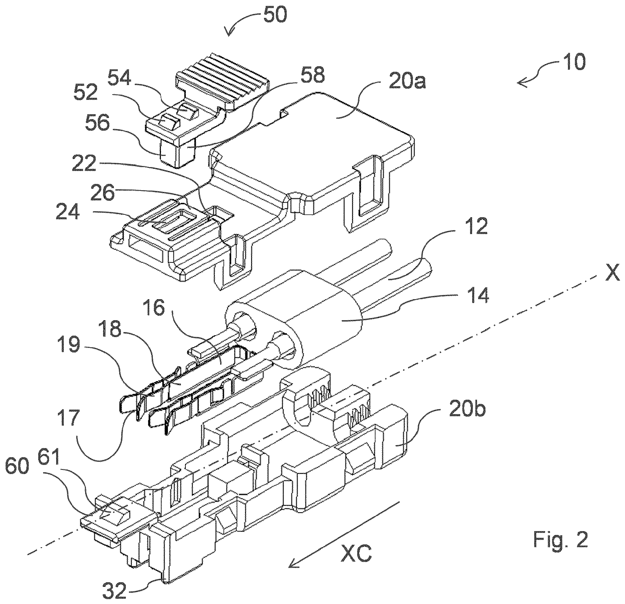

Figure 2 shows an exploded illustration of the connector 10 illustrated in Figs. 1a and 1b. An elongated housing 20, in this embodiment consisting from an upper part 20a and a lower part 20b, is aligned along longitudinal axis X. The elongated housing 20 surrounding an elongated terminal 16 having a contact surface 17. A terminal support device 50, is attachable on the elongated housing 20 to be movable longitudinally along the elongated housing 20 from an open position to a support position. The elongated housing 20 has an elongated opening 22 where the terminal support device 50 can protrude from the inside of the elongated housing 20 to outward the elongated housing 20. The elongated housing 20 comprises a locking opening 24, arranged in a flexible tong 26. The terminal support device 50 comprises a first locking protrusion 52 and a second locking protrusion 54, protruding outward the elongated housing 20. The first locking protrusion 52 is located in the locking opening 24 when the terminal support device 50 is in the open position O. The first locking protrusion 52 and the second locking protrusion 54 are located in the locking opening 24 when the terminal support device 50 is in the support position C. The terminal support device 50 comprises a support protrusion 56 protruding perpendicular to the longitudinal axis X inward the elongated housing 20. The support protrusion 56 comprises a flat activation surface 58 for increasing the contact pressure. The flat activation surface 58 is aligned to the longitudinal axis X. The elongated terminal 16 is aligned along the longitudinal axis X of the elongated housing 20. The elongated terminal 16 comprises a straight portion 18 and a bend portion 19. The flat activation surface 58 is arranged opposite the straight portion 18 when the terminal support device 50 is in the open position O. The flat activation surface 58 contacts the bend portion 19 when the terminal support device 50 is in the support position C. The elongated housing 20 comprises a bar 60, protruding in the mating direction XC along the longitudinal axis X. The bar 60 is having a third locking protrusion 61 to lock the elongated housing to a locking opening 161 in a flexible locking tong 160 of said counter connector 100 (Fig. 1a). The connector 10 has two elongated terminals 16 and the protrusion 56 is arranged between the two elongated terminals. Electrical wires 12 are guided through openings of a Ferrite body 14 and attached on the terminals 16 to electrically connect the wires 12 to the terminals 16. In this embodiment the wires 12 are connected by ultrasonic welding.

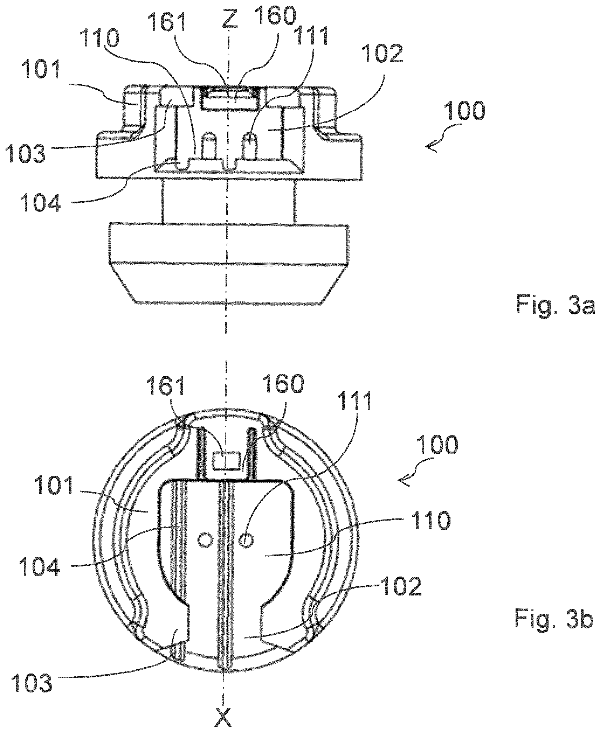

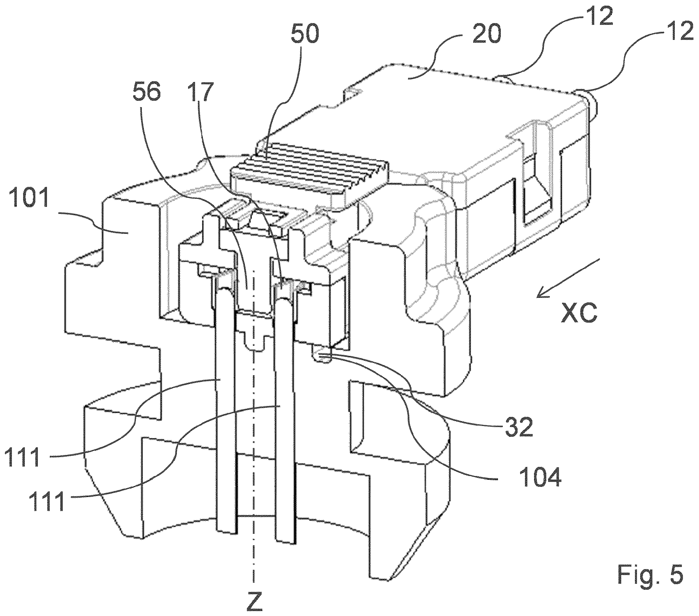

Figure 3a shows a side view of the counter connector 100. The counter connector 100 comprises a plane surface 110, arranged perpendicular to a counter connector axis Z. A part of the counter contact element 111 protrudes from the plane surface 110 along the counter connector axis Z. A shroud 101 surrounds partly, the one counter contact element 111. The length of the part of the counter contact element 111 protruding out of the plane surface 110, is less than 50% of the extension, of the shroud 101 from the plane surface 110, along the counter connector axis Z. The plane surface 110 comprises a groove 104, aligned along the longitudinal axis X. The electrical connector 10 comprises a rib 32 aligned along the longitudinal axis X (Fig.2). The rib 32 is carried in the groove 104, when the connector 10 and the counter connector 100 are fully connected (Fig. 5).

Figure 3b shows a top view of the counter connector 100. The shroud 101 surrounds the plane surface 110 partly. The shroud 101 has a cutout 102 to allow insertion of the connector 10. The cutout 102 has a shroud protrusion 103 on the end opposite the plane surface 110. The shroud protrusion 103 prevents movement of the connector in directions of the counter connector axis Z, while insertion of the connector 10. The connector 10 can be inserted by moving the connector along the longitudinal axis X through the cutout 102 into the counter connector 100. While moving, the connector rib 32 is guided in the counter connector groove 104.

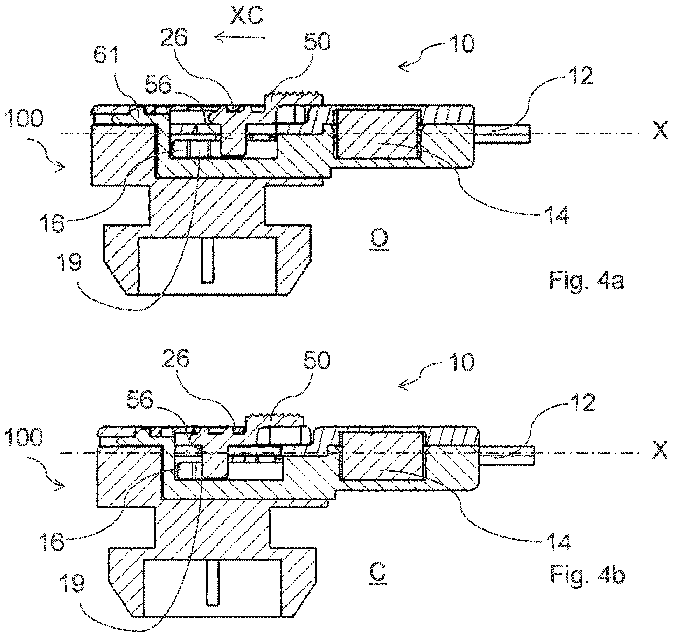

Figure 4a shows a cut view of the connector assembly of Fig. 1b wherein the cut is executed along the longitudinal axis X. The connector 10 is mechanically locked to the counter connector 100 by the locking protrusion 61 that is lock locked in the opening 161 of the counter connector 100. The support device 50 is in the open position O locked by the flexible tong 26. Figure 4b shows the support device 50 is locked in the support position C by the flexible tong 26. The protrusion 56 is in contact with the bend portion 19 of the terminal 16.

Figure 5 shows a cut view of the connector assembly of Fig. 1b with a cut along the longitudinal axis. The support device is in the support position C. The contact surface 17 of the one elongated terminal 16 is arranged in an angle outward to the longitudinal axis X and whereby the counter contact element 111 is pin shaped.

## Claims

1. Electrical connector (10) for airbag restraint systems, comprising an elongated housing (20) aligned on a longitudinal axis (X) corresponding to a mating direction of the connector (10), surrounding at least one elongated terminal (16) having a contact surface (17), a terminal support device (50), attached on the elongated housing and movable longitudinally along the elongated housing from an open position (O) to a support position (C),whereby the terminal support device comprises a support protrusion (56) protruding perpendicular to the longitudinal axis (X) inward the elongated housing and increases the contact pressure of the contact surface, to a counter contact element (111), when the connector is mated to a counter connector (100) and the terminal support device (50) is in the support position, wherein the support protrusion (56) comprises a flat activation surface (58) for increasing said contact pressure and being aligned to the longitudinal axis (X), wherein the elongated terminal (16) is aligned along the longitudinal axis (X) of the elongated housing (20), wherein the elongated terminal (16) comprises a straight portion (18) and a bend portion (19), wherein the flat activation surface (58) is arranged opposite the straight portion (18) when the terminal support device is in the open position (O) and wherein the flat activation surface (58) contacts the bend portion (19) when the terminal support device is in the support position (C).

2. Electrical connector (10) according to claim 1, wherein the elongated housing (20) has an elongated opening (22) and wherein the terminal support device (50) protrudes from the inside of the elongated housing, through the elongated opening, to outward the elongated housing.

3. Electrical connector (10) according to any preceding claim, wherein the elongated housing (20) comprises a locking opening (24), arranged in a flexible tong (26) and the terminal support device (50) comprises a first locking protrusion (52) and a second locking protrusion (54) protruding outward the elongated housing, wherein the first locking protrusion is located in the locking opening when the terminal support device is in the open position (O) and wherein the first locking protrusion and the second locking protrusion are located in the locking opening when the terminal support device is in the support position (C).

4. Electrical connector (10) according to any preceding claim, wherein the elongated housing (20) comprises a bar (60), protruding in a mating direction (XC) along the longitudinal axis (X), having a third locking protrusion (61) to lock the elongated housing to a locking opening (161) in a flexible locking tong (160) of said counter connector (100).

5. Electrical connector (10) according to any preceding claim, wherein the electrical connector comprises two elongated terminals (16) and wherein the protrusion (56) is arranged between the two elongated terminals.

6. Electrical connector assembly comprising a connector (10) according to any preceding claims and said counter connector (100), wherein, the counter connector comprises a plane surface (110), arranged perpendicular to a counter connector axis (Z) and along to the longitudinal axis (X), wherein a part of the at least one counter contact element (111) protrudes from the plane surface along the counter connector axis (Z).

7. Electrical connector assembly according to claim 6, wherein a shroud (101) surrounds, at least partly, the at least one counter contact element (111).

8. Electrical connector assembly according to any of claims 6 to 7 wherein the length of the part of the at least one counter contact element (111) protruding out of the plane surface (110), is less than 50% of the extension, of the shroud from the plane surface, along the counter connector axis (Z).

9. Electrical connector assembly according to any of claims 6 to 8 wherein the plane surface (110), comprises at least one groove (104) aligned along the longitudinal axis (X) and wherein the electrical connector (10) comprises at least one rib (32) aligned along the longitudinal axis and wherein the at least one rib is carried in the at least one groove, when the connector and the counter connector are fully connected.

10. Electrical connector assembly according to any of claims 6 to 9 wherein the contact surface (17) of the at least one elongated terminal (16) is arranged in an angle outward to the longitudinal axis (X) and whereby the at least one counter contact element (111) is pin shaped.

## Patentansprüche

1. Elektrischer Verbinder (10) für Airbag-Rückhaltesysteme, umfassend ein längliches Gehäuse (20), das auf einer Längsachse (X) ausgerichtet ist, die einer Paarungsrichtung des Verbinders (10) entspricht, und zumindest einen länglichen Anschluss (16) aufweisend einer Kontaktfläche (17) umgibt, ein Anschlussstützgerät (50), das an dem länglichen Gehäuse angebracht und in Längsrichtung entlang des länglichen Gehäuses von einer offenen Position (O) zu einer Stützposition (C) bewegbar ist, wobei das Anschlussstützgerät einen Stützvorsprung (56) umfasst, der senkrecht zu der Längsachse (X) in das längliche Gehäuse hineinragt und den Kontaktdruck der Kontaktfläche zu einem Gegenkontaktelement (111) erhöht, wenn der Verbinder mit einem Gegenverbinder (100) gepaart ist und das Anschlussstützgerät (50) in der Stützposition ist, wobei der Stützvorsprung (56) eine flache Aktivierungsfläche (58) zum Erhöhen des Kontaktdrucks umfasst und zur Längsachse (X) ausgerichtet ist, wobei der längliche Anschluss (16) entlang der Längsachse (X) des länglichen Gehäuses (20) ausgerichtet ist, wobei der längliche Anschluss (16) einen geraden Abschnitt (18) und einen gebogenen Abschnitt (19) umfasst, wobei die flache Aktivierungsfläche (58) gegenüber dem geraden Abschnitt (18) angeordnet ist, wenn das Anschlussstützgerät in der offenen Position (O) ist, und wobei die flache Aktivierungsfläche (58) den gebogenen Abschnitt (19) kontaktiert, wenn das Anschlussstützgerät in der Stützposition (C) ist.

2. Elektrischer Verbinder (10) gemäß Anspruch 1, wobei längliche Gehäuse (20) eine längliche Öffnung (22) aufweist und wobei das Anschlussstützgerät (50) von der Innenseite des länglichen Gehäuses durch die längliche Öffnung hindurch nach außen aus dem länglichen Gehäuse herausragt.

3. Elektrischer Verbinder (10) gemäß irgendeinem vorhergehenden Anspruch, wobei das längliche Gehäuse (20) eine Verriegelungsöffnung (24) umfasst, die in einer flexiblen Lasche (26) angeordnet ist, und das Anschlussstützgerät (50) einen ersten Verriegelungsvorsprung (52) und einen zweiten Verriegelungsvorsprung (54) aufweist, die aus dem länglichen Gehäuse herausragen, wobei sich der erste Verriegelungsvorsprung in der Verriegelungsöffnung befindet, wenn das Anschlussstützgerät in der offenen Position (O) ist, und wobei sich der erste Verriegelungsvorsprung und der zweite Verriegelungsvorsprung in der Verriegelungsöffnung befinden, wenn das Anschlussstützgerät in der Stützposition (C) ist.

4. Elektrischer Verbinder (10) gemäß irgendeinem vorhergehenden Anspruch, wobei das längliche Gehäuse (20) einen Stab (60) umfasst, der in einer Paarungsrichtung (XC) entlang der Längsachse (X) ragt und einen dritten Verriegelungsvorsprung (61) aufweist, um das längliche Gehäuse mit einer Verriegelungsöffnung (161) in einer flexiblen Verriegelungslasche (160) des Gegenverbinders (100) zu verriegeln.

5. Elektrischer Verbinder (10) gemäß irgendeinem vorhergehenden Anspruch, wobei der elektrische Verbinder zwei längliche Anschlüsse (16) aufweist und wobei der Vorsprung (56) zwischen den zwei länglichen Anschlüssen angeordnet ist.

6. Elektrische Verbinder-Baugruppe umfassend einen Verbinder (10) gemäß irgendeinem der vorhergehenden Ansprüche und den Gegenverbinder (100), wobei der Gegenverbinder eine ebene Fläche (110) umfasst, die senkrecht zu einer Gegenverbinderachse (Z) und entlang der Längsachse (X) angeordnet ist, wobei ein Teil des zumindest einen Gegenkontaktelements (111) aus der ebenen Fläche entlang der Gegenverbinderachse (Z) herausragt.

7. Elektrische Verbinder-Baugruppe gemäß Anspruch 6, wobei eine Ummantelung (101) das zumindest eine Gegenkontaktelement (111) zumindest teilweise umgibt.

8. Elektrische Verbinder-Baugruppe gemäß irgendeinem der Ansprüche 6 bis 7, wobei die Länge des Teils des zumindest einen Gegenkontaktelements (111), der aus der ebenen Fläche (110) herausragt, weniger als 50% der Erstreckung der Ummantelung von der ebenen Fläche entlang der Gegenverbinderachse (Z) ist.

9. Elektrische Verbinder-Baugruppe gemäß irgendeinem der Ansprüche 6 bis 8, wobei die ebene Fläche (110) zumindest eine Nut (104) umfasst, die entlang der Längsachse (X) ausgerichtet ist, und wobei der elektrische Verbinder (10) zumindest eine Rippe (32) umfasst, die entlang der Längsachse ausgerichtet ist, und wobei die zumindest eine Rippe in der zumindest einen Nut getragen wird, wenn der Verbinder und der Gegenverbinder vollständig verbunden sind.

10. Elektrische Verbinder-Baugruppe gemäß irgendeinem der Ansprüche 6 bis 9, wobei die Kontaktfläche (17) des zumindest einen länglichen Anschlusses (16) in einem Winkel nach außen zu der Längsachse (X) angeordnet ist und wobei das zumindest eine Gegenkontaktelement (111) stiftförmig ist.

## Revendications

1. Connecteur électrique (10) pour des systèmes de retenue d'airbag, comprenant un boîtier allongé (20) aligné sur un axe longitudinal (X) correspondant à une direction d'emboîtement du connecteur (10), entourant au moins une borne allongée (16) possédant une surface de contact (17), un dispositif support de borne (50), solidarisé au boîtier allongé et mobile longitudinalement le long du boîtier allongé d'une position ouverte (O) à une position de support (C), selon lequel le dispositif support de borne comprend un relief de support (56) faisant saillie perpendiculairement à l'arbre longitudinal (X) vers l'intérieur du boîtier allongé et augmente la pression de contact de la surface de contact, vers un élément de contre-contact (111), lorsque le connecteur est emboîté à un contre-connecteur (100) et que le dispositif support de borne (50) est dans la position de support, dans lequel le relief de support (56) comprend une surface d'activation plane (58) pour augmenter ladite pression de contact et qui est aligné sur l'axe longitudinal (X), dans lequel la borne allongée (16) est alignée suivant l'axe longitudinal (X) du boîtier allongé (20), dans lequel la borne allongée (16) comprend une partie rectiligne (18) et une partie courbe (19), dans lequel la surface d'activation plate (58) est agencée à l'opposé de la partie rectiligne (18) lorsque le dispositif support de borne est dans la position ouverte (O) et dans lequel la surface d'activation plate (58) vient en contact avec la partie courbe (19) lorsque le dispositif support de borne est dans la position de support (C).

2. Connecteur électrique (10) selon la revendication 1, dans lequel le boîtier allongé (20) possède une ouverture allongée (22) et dans lequel le dispositif support de borne (50) fait saillie depuis l'intérieur du boîtier allongé, au travers de l'ouverture allongée, vers l'extérieur du boîtier allongé.

3. Connecteur électrique (10) selon l'une des revendications précédentes, dans lequel le boîtier allongé (20) comprend une ouverture de verrouillage (24), agencée dans une languette flexible (26) et le dispositif support de borne (50) comporte un premier relief de verrouillage (52) et un second relief de verrouillage (54) faisant saillie vers l'extérieur du boîtier allongé, dans lequel le premier relief de verrouillage est situé dans l'ouverture de verrouillage lorsque le dispositif support de borne est dans la position ouverte (O) et dans lequel le premier relief de verrouillage et le second relief de verrouillage sont situés dans l'ouverture de verrouillage lorsque le dispositif support de borne est dans la position de support (C).

4. Connecteur électrique (10) selon l'une des revendications précédentes, dans lequel le boîtier allongé comprend une barrette (60), faisant saillie dans une direction d'emboîtement (XC) le long de l'axe longitudinal (X), possédant un troisième relief de verrouillage (61) pour verrouiller le boîtier allongé à une ouverture de verrouillage (161) dans une languette de verrouillage flexible (160) dudit contre-connecteur (100).

5. Connecteur électrique (10) selon l'une des revendications précédentes, dans lequel le connecteur électrique comprend deux bornes allongées (16) et dans lequel le relief (56) est agencé entre les deux bornes allongées.

6. Ensemble de connecteur électrique comprenant un connecteur (10) selon l'une des revendications précédentes et ledit contre-connecteur (100), dans lequel le contre-connecteur comprend une surface plane (110), agencé perpendiculairement à un axe de contre-connecteur (Z) et suivant l'axe longitudinal (X), dans lequel une partie de l'au moins un élément de contre-contact (111) fait saillie de la surface plane le long de l'axe de contre-connecteur (Z).

7. Ensemble de connecteur électrique selon la revendication 6, dans lequel une protection (101) entoure au moins partiellement l'au moins un élément de contre-contact (111).

8. Ensemble de connecteur électrique selon l'une des revendications 6 à 7, dans lequel la longueur de la partie de l'au moins un élément de contre-contact (111) faisant saillie hors de la surface plane (110) est inférieure à 50 % du prolongement de la protection, à partir de la surface plane, le long de l'axe de contre-connecteur (Z).

9. Ensemble de connecteur électrique selon l'une des revendications 6 à 8, dans lequel la surface plane (110) comprend au moins une gorge (104) alignée suivant l'axe longitudinal (X) et dans lequel le connecteur électrique (10) comprend au moins une nervure (32) alignée suivant l'axe longitudinal et dans lequel l'au moins une nervure est portée dans l'au moins une gorge lorsque le connecteur et le contre-connecteur sont entièrement connectés.

10. Ensemble de connecteur électrique selon l'une des revendications 6 à 9, dans lequel la surface de contact (17) de l'au moins un élément allongé (16) est agencée dans un angle à l'extérieur de l'axe longitudinal (X) et selon lequel l'au moins un élément de contre-connecteur (111) est en forme de broche.
